# EUROPEAN PATENT SPECIFICATION

(11) **EP 2 265 404 B1**
(45) Date of publication and mention of the grant of the patent: **25.01.2017**
(21) Application number: 09733893.3
(22) Date of filing: 06.04.2009
(51) Int. Cl.: B23D 21/14, B23D 31/00

(54) **CUTTING METHOD AND APPARATUS**
SCHNEIDEVERFAHREN UND -VORRICHTUNG
PROCÉDÉ ET APPAREIL DE COUPE

(30) Priority: 21.04.2008 GB 0807237
(43) Date of publication of application: 29.12.2010
(73) Proprietor: Crown Packaging Technology, Inc., Alsip, IL 60803-2599 (US)
(72) Inventor: DUNWOODY, Paul, Robert, Wantage Oxfordshire OX12 9EU (GB)
(74) Representative: Lind, Robert
(86) International application number: PCT/EP2009/054076
(87) International publication number: WO 2009/130122

(56) References cited:
- WO-A-95/11104
- WO-A-2009/060291
- DE-A1- 3 619 322
- US-A- 2 139 682
- US-A- 2 621 622
- US-A- 3 157 080

## Description

### Technical Field

The present invention concerns the cutting of the sidewall of a cup-shaped sheet metal can body, closure or similar article. In particular it relates to the cutting of a drawn cup-shaped closure body having an inwardly protruding feature or features at its rim, into a separate ring and shallower cup-shaped article.

### Background Art

Several methods are known by which can bodies are cut (trimmed) to a desired height to produce a separate ring. These methods are used in rotating machinery commonly supplied for example by Belvac Production Machinery and by CarnaudMetalbox Engineering, and are well suited to trimming where the ring is usually discarded, and where the height of the cut ring is usually significantly less than the height of the trimmed can body.

WO 08053013 A (CROWN PACKAGING TECHNOLOGY, INC.) and EP2254806 describe methods of manufacturing a two-part closure and the resulting two-part closures respectively. To produce such closures requires the cutting of a drawn cup-shaped article close to its end panel, such that the height of the cut ring part is greater than the height of the cut end-part. To manufacture the closures described in these patents, it would be useful for the cup shaped article to have an inwardly protruding curl already formed at the rim before cutting. It would be even better to be able to cut a cup shaped article that also had inwardly protruding lugs.

Known cutting methods are difficult to use to cut such closures due to the proximity of the closed end of the cup to the cutting tools.

Most conventional cutting processes use a pair of knives to cut the metal in a rotary scissor-action and may leave undesirable burrs on opposing sides of the cut edge. If similar cutting processes are used on coated metal, then hairs of coating material may be created during cutting and/or subsequent forming of the cut edges.

Residual stresses in drawn sheet metal parts can result in distortion of the cut parts during cutting. This can cause the cut-edges of the ring and end-parts to deviate from a circular path as cutting progresses around the periphery such that undesirable sharp slivers can be produced.

The cut edges produced by known rotary cutting methods produce little or no bending inwards or outwards ("flare") of the cut-edge, thus neither increasing nor decreasing the diameter of the wall significantly at the cut-edge. However, if it is desired subsequently to flange or curl either or both the cut-edges inwardly or outwardly, as in the case of producing the closures described in WO 08053013 A (CROWN PACKAGING TECHNOLOGY, INC.) and EP-08153134, it would be advantageous for the cut-edge already to have a flare in the same direction after cutting.

Most known cutting apparatus cannot be used to cut a can body having any inwardly protruding rim.

Other known methods of cutting also have disadvantages. Laser cutting produces vaporised debris, which may contaminate the finished article. Clip trimming as described in WO 08053013 A (CROWN PACKAGING TECHNOLOGY, INC.) can only be carried out on an article that has no inwardly projecting features on the sidewall. US3157080 discloses a method of cutting a cup shaped body using cutting rings either side of the sidewall. US2139682 discloses a method of producing a curled edge to a cut using a cutting blade on one side of a metal section and two rings pressing against the other side of the section.

The processes of "scoring" and "parting" are known for producing two open-ended cylinders from one open-ended cylinder. This involves firstly producing a linear indentation or "score" on a flat, typically rectangular sheet metal blank. The blank is then rolled into an open-ended cylinder so that the score becomes circumferential part way up the outside of the cylinder, and then the adjacent edges of the blank are joined by welding. The cylinder is then parted by rolling a circular tool around the inside of the cylinder adjacent to the score whilst the outside of the cylinder is supported by a pair of curved rails positioned at either side of the score. However, this method can only be used on a flat sheet metal blank, to produce cylinders which are open at both ends.

US3157080 discloses a method of producing a two body object from a cup shaped item using two rotating blades either side of the metal surface to be cut.

US2139682 discloses a method of cutting metal using a rotating cutting blade on one side of the metal and two backing rollers on the other.

### Disclosure of Invention

According to a first aspect, there is provided a method of manufacture of a two-part article from a cup having a sidewall and integral base, formed from a single sheet metal blank, the method comprising the features of claims 1.

This cost-effective manufacture of, for example, certain two-part closures or can body and end component combinations from one drawn sheet metal blank thus uses a rotary method (and complementary apparatus) to cut a substantially cylindrical portion of the sidewall of the cup-shaped article ('cup') to an even height. The cutting process of the invention is suitable to cut a cup-shaped article that has an inwardly protruding feature or features already formed on its rim before cutting.

Advantageously, the cutting process produces a slight inward bend or "flare" to assist subsequent forming of features such as curls to hide or protect the cut-edge. The method of the invention also ensures that the end of the cut coincides with the start of the cut to avoid the formation of slivers. Ideally, the cutting process positions any burrs or weakened coatings that are formed during the cutting process so as to avoid being dislodged by subsequent forming operations.

In an embodiment the method comprises limiting axial movement of the cup.

In an embodiment the depth of the groove is from about half to three quarters of the wall thickness and the penetration angle is between about 45 degrees and 90 degrees, preferably between about 50 degrees and 75 degrees, whereby the material at the base of the groove forms a "score residual".

In a second aspect there is provided an apparatus for carrying out a method according to the first aspect, in which one or more cutting rings are arranged for rotation about a central axis and the anvil is concentric to that axis.

In an embodiment the axis of a central cutting ring is stationary and the anvil rotates, the anvil having a portion of constant radius for contacting the cup.

In an embodiment, the apparatus further comprises guiding surfaces for controlled axial sliding of the cup.

In an embodiment each side of the groove in the profiled ring is asymmetrical whereby a different flare is formed in the cut ring from that of the cut end-part.

### Brief Description of Figures in the Drawings

Preferred embodiments of the invention will now be described by way of example only, with reference to the drawings, in which:
Figures Ia, 1b, 1c and 1d are side, top, sectional and perspective views of a cup;
Figures 2a, 2b, 2c and 2d are a sectional view of a cut end-piece, a sectional view of a cut ring and enlarged detailed partial sectional views of their respective cut edges;
Figures 3a and 3b are a sectional view and an enlarged detailed partial sectional view of a scored cup;
Figures 4a, 4b, 4c, and 4d are a sectional view of a parted end-piece, a sectional view of a parted ring and enlarged detailed partial sectional views of their respective parted edges;
Figures 5a and 5b are perspective and side views of a manually operated apparatus used to score a cup;
Figures 6a, 6b, 6c and 6d are a sectional view of a manually operated apparatus being used to score a cup, enlarged detailed partial sectional views of the scoring tools and a sectional view of a manually operated apparatus being used to score a cup, sectioned in the plane of the score;
Figures 7a, 7b and 7c are a sectional view of a manually operated apparatus being used to part a cup and enlarged detailed partial sectional views of the parting tools;
Figure 8 is a schematic view of an alternative arrangement to score cups;
Figure 9a, 9b, 9c, and 9d are perspective, top, sectional and enlarged detailed sectional views of an alternative arrangement to part cups;
Figures 10a, 10b, and 10c are a sectional view of a manually operated apparatus being used to score a cup, and enlarged detailed partial sectional views of the scoring tools; and
Figures 11 a, 11 b and 11 c are a sectional view of a manually operated apparatus being used to part a cup and enlarged detailed partial sectional views of the parting tools.

### Mode(s) for Carrying Out the Invention

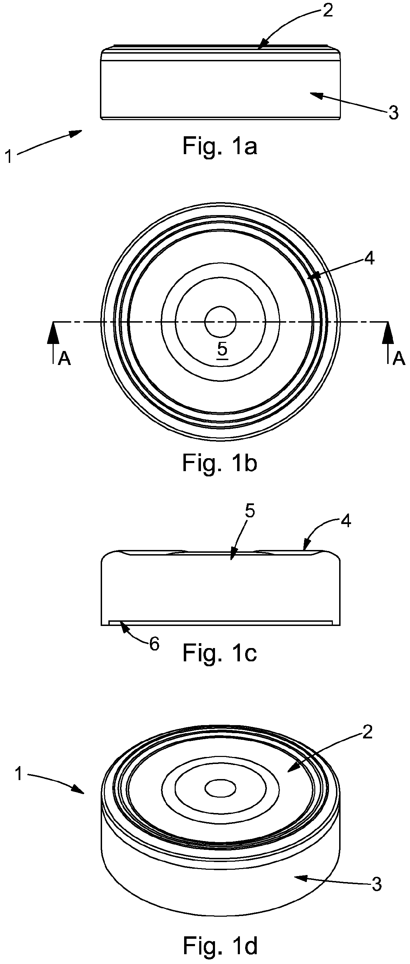

Figures 1 a to 1 d show a cup 1 comprising an end 2 and integral sidewall 3. The end 2 is profiled into beads 4 and centre panel 5 during the cupping process (see figure 1 b and section through A-A in figure 1 c). The sidewall 3 terminates with an inward curl 6 which is best seen in figure 1c.

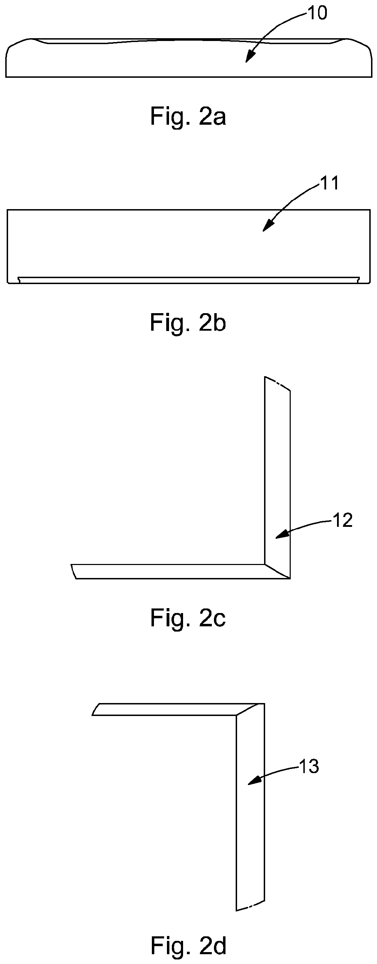

Figure 2 shows the cut end piece 10 (figure 2a) and cut ring 11 (figure 2b) from a single stage process. Their respective cut edges 12 and 13 are shown in figures 2c and 2d.

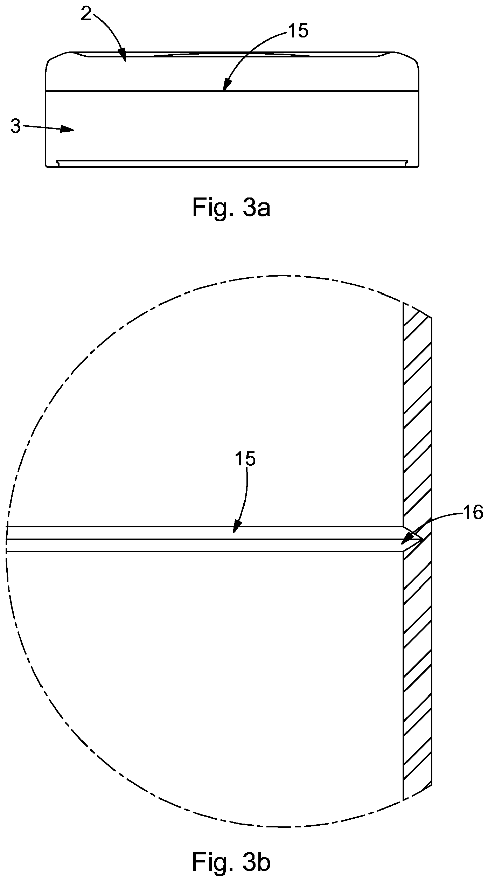

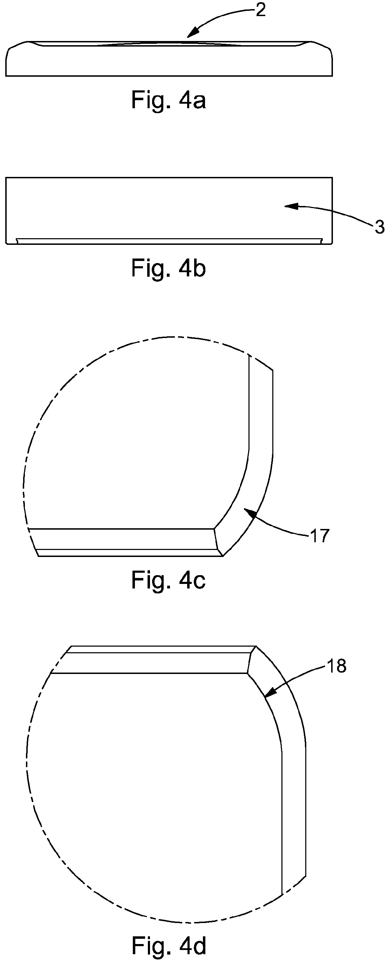

The two stage option of figures 3 and 4 first forms a score 15 in sidewall 3 towards the end 2 with a 'V'-shaped cut between half and three quarters of the wall thickness having a total internal angle 16 of about 60° (degrees). When the end piece 2 of figure 4a is parted from sidewall (ring) 3, the parted edges 17 and 18 are flared inwardly

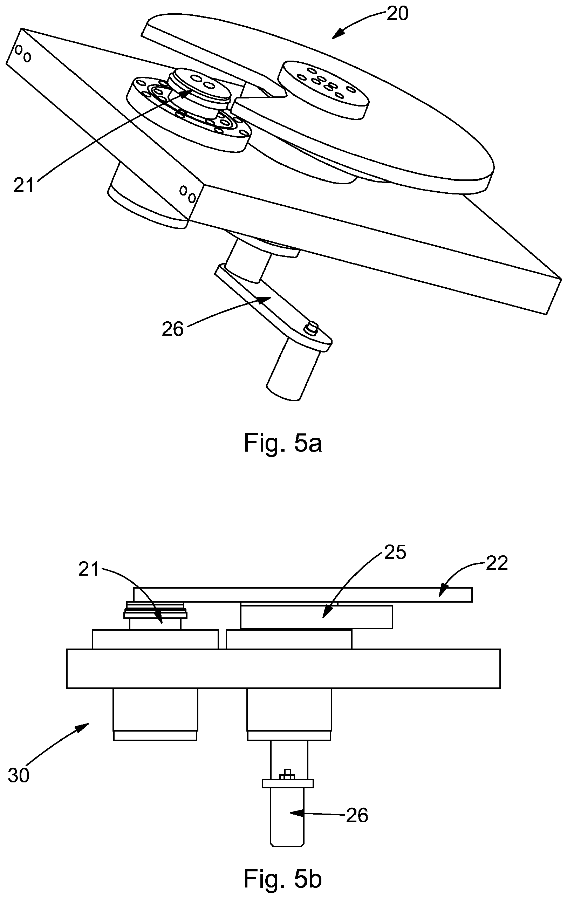

A manual cutting or scoring apparatus 20 is shown in perspective and side views respectively in figures 5a and 5b. The apparatus comprises a cutting ring 21 positioned below a cut-out of top plate 22. Beneath the top plate 22, an anvil 25 can be seen in the side view of figure 5b.

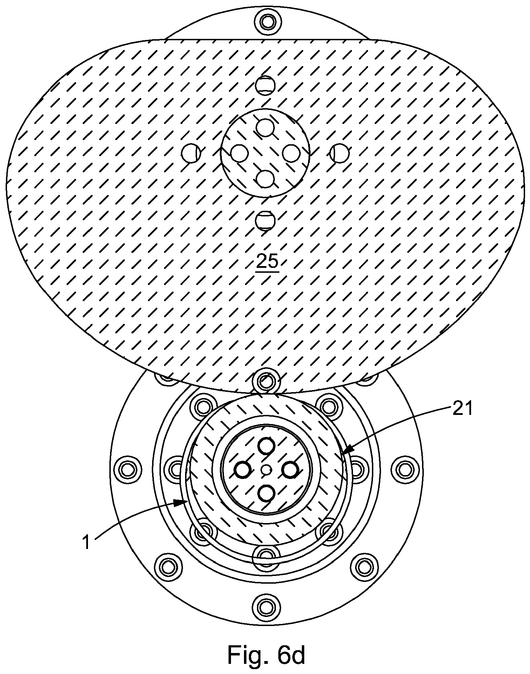

The shape of the anvil 25 can be better seen in figure 6d. The anvil 25 has a portion of constant radius and also a portion of reduced radius coincident with the cut-out of top plate 22. The length of the constant radius portion of the anvil 25 is greater than the circumference of the cup 30. Handle 26 is connected by bolts to the rotating anvil 25 and top plate 22.

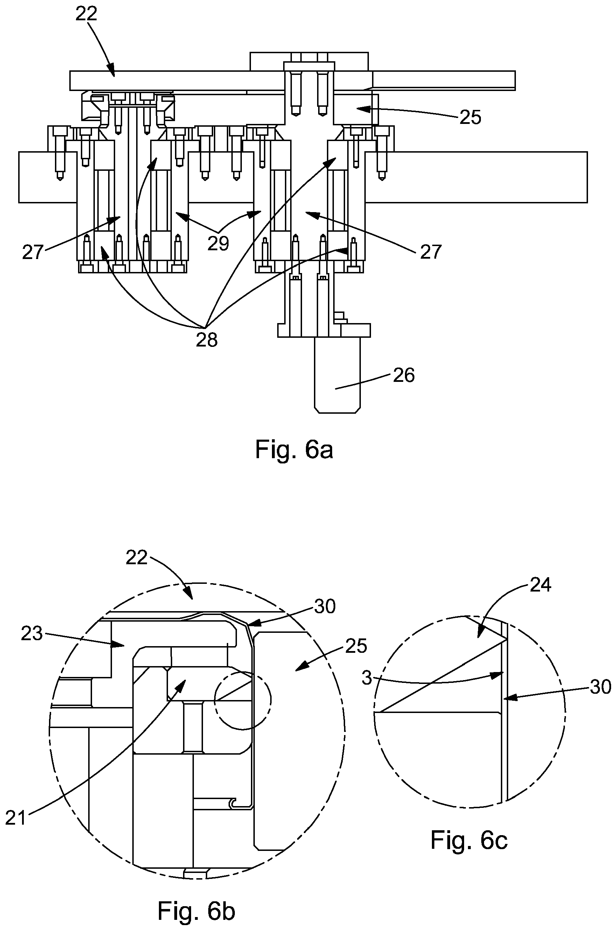

In the sectional view of the scoring apparatus in figures 6a, 6b and 6c, a cup 30 has been placed over a lower guide surface 23 and an upper guide surface of top plate 22 traps the cup 30 in position over cutting ring 21. As the handle is rotated, the anvil 25 turns until it pushes cup 30 against the edge 24 of cutting ring 21. The cutting ring edge has an angle of 60°-70° (degrees), which forms a corresponding groove in the cup 30. The rotation of the constant radius portion of the anvil 25 rotates the cup 30 and cutting ring 21 about their respective axes, such that the cup 30 revolves at least one full turn.

Whilst the top plate 22 is connected to and rotates with the anvil 22 for convenience of loading the cup through the cut-out, an upper guide surface 22 may be provided by any flat surfaced part attached to the apparatus adjacent to the cup in the position shown in figure 6b.

The depth of the groove may be controlled by adjusting the distance between the shafts 27 and 27', to which the cutting ring and anvil are mounted. In the apparatus of fig 6a, these shafts run in bearings 28 which are mounted in housings 29 either or both of which may have inside diameters that are eccentric to their outside diameters. Rotating such an eccentric housing will alter the distance between the shafts.

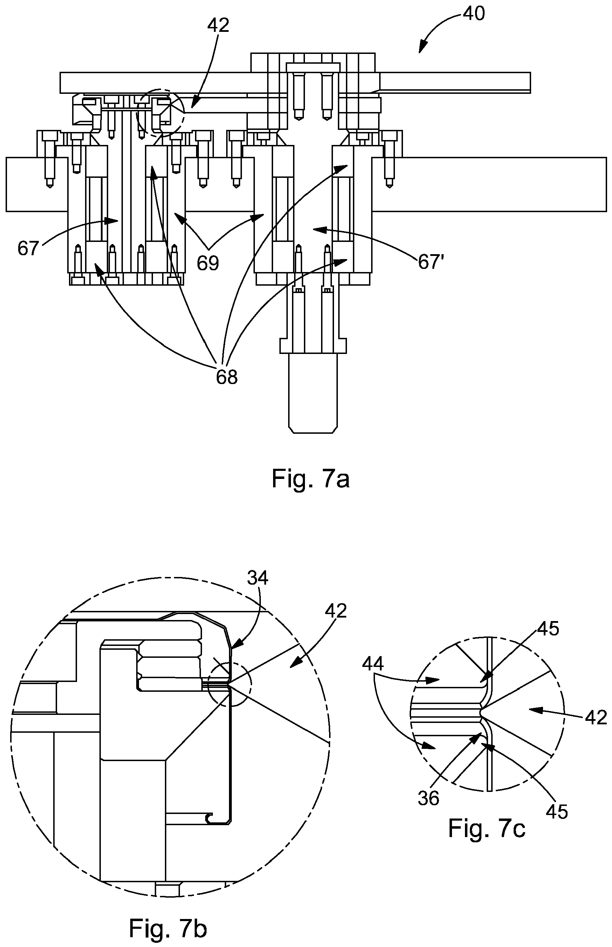

The depth of the groove may be further controlled by the radius of the depth-setting ring 27 in relation to the radius of the cutting ring 21. If the depth of the groove is sufficient, the bottom of the groove will be split by the cutting ring edge 24, and the cutting will be complete in a single stage. If the depth of the groove is shallow and there is a sufficient residual thickness of metal, then cutting is completed using the parting apparatus 40 of figure 7.

In another version of this embodiment the anvil may have two portions of constant radius, each having sufficient chordal length to drive the cup through at least one revolution. The first portion to contact the cup would have a slightly smaller radius than the second, such that a shallow groove would be formed by the first portion and would be deepened by the second portion. In this version, the distortion of the cup during forming of the shallow groove would be reduced, and this groove would then provide guidance for the cup to the cutting ring during deepening by the second portion. Such an apparatus might also be used to complete the cutting of the cup if the second portion of the anvil deepened the cut so as to cause it to split.

This scoring stage produces a groove which is then parted by the apparatus of figure 7. The cutting edge 24 of figure 6c produces a circumferential groove on the inner sidewall 32 of cup 30. In the parting apparatus 40, parting tool 42 pushes and enters the outside sidewall 34 of cup 30 adjacent the groove 15 to split the bottom of the groove and produce a slight inward bend or flare 36.

The penetration distance of the parting tool 42 into the cup wall may be controlled by adjusting the distance between the shafts 68, 68', to which the supporting annuli 44 and parting tool 42 are mounted. In the apparatus of fig 7a, these shafts run in bearings 68 which are mounted in housings 69 either or both of which may have inside diameters that are eccentric to their outside diameters. Rotating such an eccentric housing will alter the distance between the shafts.

Supporting annuli 44 enable metal to be formed around radii at each apex 45 as parting tool 42 moves radially inwardly. This assists any subsequent forming operations which are to be carried out on the cut cup or ring, such as curls, seams or flanges. By using this apparatus, the cut is formed completely circumferential, with the end of the cut accurately positioned so as to coincide with the start of the cut. This ensures that the formation of slivers of metal is avoided.

In another version of this embodiment, the parting tool 42 may have two portions of constant radius, each having sufficient chordal length to drive the cup through at least one revolution. The first portion to contact the cup would have a slightly smaller radius than the second, such that a shallow indentation would be formed by the first portion and would be deepened by the second portion to cause the bottom of the groove to split. In this version, the flare would be formed more evenly around the periphery of the cut edges, especially where the split starts and finishes.

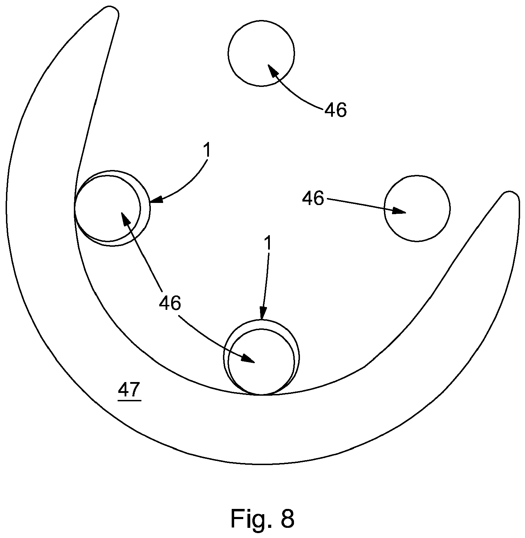

An alternative scoring arrangement for rotary movement of the cup 1 could carry a series of cups supported by scoring or cutting mandrel 46 rolling the cups along a curved rail 47, which acts as the anvil. This arrangement is shown in figure 8. A similar arrangement may be used for parting.

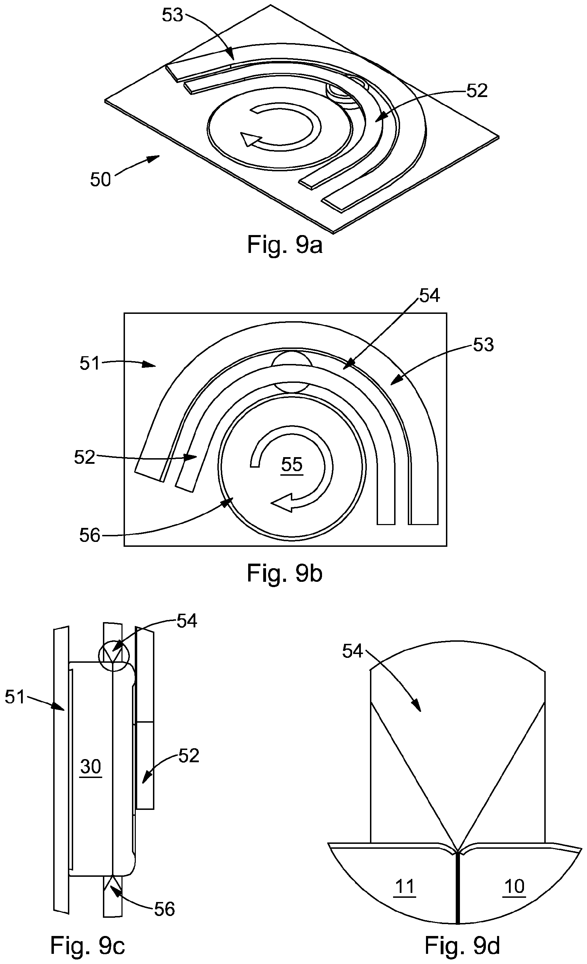

The alternative parting apparatus 50 of figure 9 comprises a bottom plate 51 and guide rail 52, a fixed outer parting rail 53 having an edge 54 and a rotating parting wheel 55 having an edge 56. The cup 30 is introduced between the rail 53 and wheel 55. The cup is held in one plane by the close fit of bottom plate 51 and guide rail 52. The diameter of the cup 30 is slightly less than the difference between the radii of the edges 54 and 56, and thus the cup is both driven around the apparatus as indicated by the arrow, and the sidewall is progressively indented to form a flare 36 and is split to form a cut end piece 10 and cut ring 11.

An additional supporting ring or rings may be attached to either or both sides of the parting wheel, and additional supporting rails may be attached to either or both sides of the outer parting rail, to contact and help drive the cup around the apparatus during parting

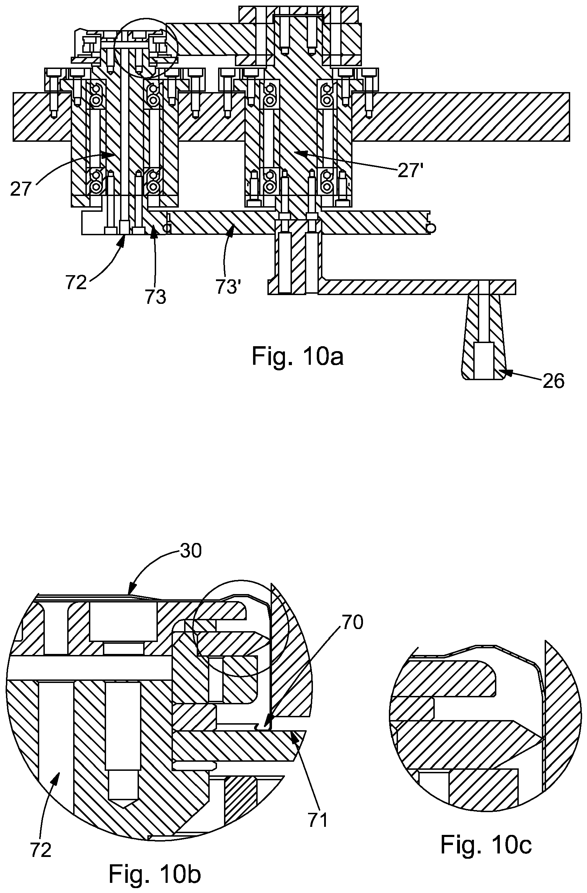

The scoring apparatus of figures 10a, 10b and 10c shows additional and alternative features to the scoring apparatus of figures 6a, 6b and 6c. In figure 10, the rim (70) of the cup (30) is held against a planar surface (71), by applying suction to the inside of the cup through the channel (72). Rotation of the handle (26) drives both shafts (27 and 27') via wheels (73 and 73'). This arrangement avoids skidding of the cup, and ensures complete formation of the "V" shaped groove around the cup.

Application of a lubricant to the cutting rings of either figure 6 or figure 10, before the cup is placed in the apparatus may improve the life of the cutting ring and assist subsequent performance in manufacturing and use.

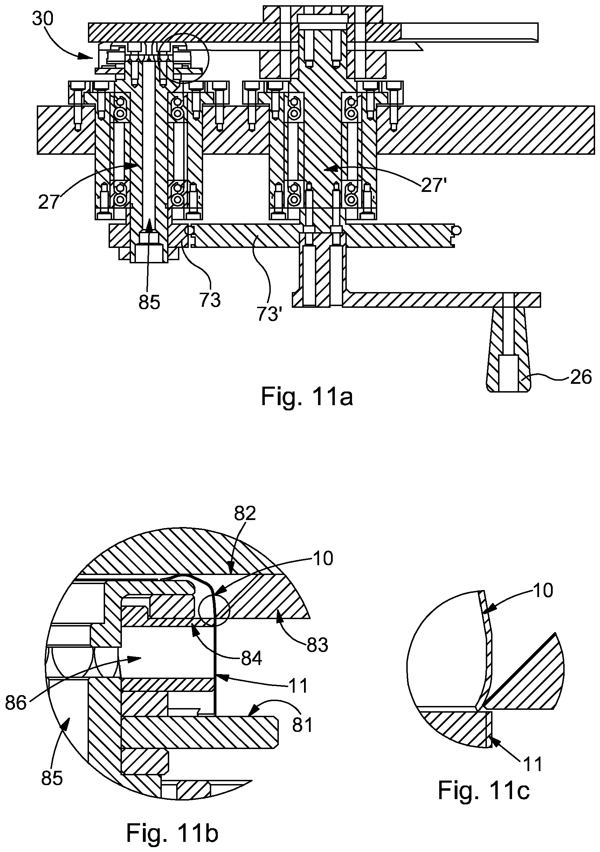

The parting apparatus of figures 11 a, 11 b and 11 c shows an example not falling under the claims with additional and alternative features to the scoring apparatus of figures 7a, 7b and 7c. In figure 11, the scored cup (30) is able to rotate and slide between planar surfaces (81and 82). Suction is applied via interconnecting channels (85, 86), which pulls the rim of the cup (30) against planar surface (81).

Rotation of the handle (26) brings the parting tool (83) into contact with the outer sidewall of the cup, just above the "V" shaped groove, and pushes the inner sidewall of the cup against the ring (84) just below the "V" shaped groove. The shearing action of the parting tool and ring splits the cup (30) into a cut end piece (10) and a cut ring (11). Rotation of the handle (26) rotates the parting tool (83) and rotates the ring (84), cup (30), and surface (81) via the shafts (27 and 27') and wheels (73 and 73'). This arrangement avoids skidding of the cup, and ensures complete cutting around the cup. Air that is sucked through the gap that is formed between the cut end piece (10) and the cut ring (11) carries away any debris released during cutting through the interconnecting channels (85, 86). Whilst figure 11 shows a ring inside a cup below a parting tool outside a cup, it is equally possible to position a ring inside a cup above a parting tool outside a cup.

The apparatus of figure 6 or figure 10 could be used twice in any combination - firstly to form a groove using one cutting ring, and secondly to complete the cut by splitting along the groove using another cutting ring.

Further methods of achieving even cutting without risk of tearing material are possible within the scope of the invention, including for example combinations of any of the methods and apparatus described.

## Claims

1. A method of manufacture of a two-part article (10,11) from a cup (1) having a sidewall (3) and integral base, formed from a single sheet metal blank, the method comprising: placing the cup over a circular cutting ring (21) having a sharp peripheral edge (24); pressing an anvil (25) having a curved surface, against the outside of the cup and rolling the anvil (25) against and around the cup, to cause the edge of the cutting ring to penetrate into the sidewall of the cup to form a continuous circumferential "V" shaped groove, wherein the method further comprises, at a second stage, placing the cup over a profiled ring having a grooved profile; (44) aligning the profile opposite the "V" shaped groove; pressing and rolling a parting tool (42) against the outside of the cup opposite the groove, whereby penetration of the parting tool into the wall of the cup causes the material at the bottom of the groove to split, and the material either side of the split to bend or "flare" inwards.

2. A method according to claim 1, further comprising limiting axial movement of the cup.

3. A method according to any one of claim 1 or claim 2, in which the depth of the groove is from about half to three quarters of the wall thickness and the penetration angle is between about 45 degrees and 90 degrees, preferably between about 50 degrees and 75 degrees, whereby the material at the base of the groove forms a "score residual".

4. An apparatus for carrying out the method of any one of claims 1 to 3, in which one or more cutting rings are arranged for rotation about a central axis and the anvil is concentric to that axis.

5. An apparatus for carrying out the method of any one of claims 1 to 3, in which the axis of a central cutting ring is stationary and the anvil rotates, the anvil having a portion of constant radius for contacting the cup.

6. An apparatus according to claim 4 or claim 5, further comprising guiding surfaces for controlled axial sliding of the cup.

7. An apparatus according to any one of claims 4 to 6, in which each side of the groove in the profiled ring is asymmetrical whereby a different flare is formed in the cut ring from that of the cut end-part.

## Patentansprüche

1. Verfahren zur Herstellung eines zweiteiligen Artikels (10, 11) aus einem Becher (1) mit einer Seitenwand (3) und einer integrierten Basis, gebildet aus einem einzigen Metallblechrohling, wobei das Verfahren Folgendes beinhaltet: Platzieren des Bechers über einem kreisförmigen Schneidring (21) mit einer scharfen Umfangskante (24); Pressen eines Ambosses (25) mit einer gekrümmten Oberfläche gegen die Außenseite des Bechers und Rollen des Ambosses (25) gegen und um den Becher, um zu bewirken, dass die Kante des Schneidrings in die Seitenwand des Bechers eindringt, um eine kontinuierliche "V"-förmige Umfangsnut zu bilden, wobei das Verfahren ferner, in einer zweiten Stufe, das Platzieren des Bechers über einem profilierten Ring mit einem genuteten Profil (44) beinhaltet;
Ausrichten des Profils gegenüber der "V"-förmigen Nut; Pressen und Rollen eines Abstechwerkzeugs (42) gegen die Außenseite des Bechers gegenüber der Nut, so dass ein Eindringen des Abstechwerkzeugs in die Wand des Bechers bewirkt, dass das Material am Boden der Nut geteilt wird und dass das Material auf beiden Seiten der Teilung gebogen und "aufgedornt" wird.

2. Verfahren nach Anspruch 1, das ferner das Begrenzen der axialen Bewegung des Bechers beinhaltet.

3. Verfahren nach Anspruch 1 oder Anspruch 2, wobei die Tiefe der Nut etwa die Hälfte bis dreiviertel der Wanddicke beträgt und der Eindringwinkel zwischen etwa 45 Grad und 90 Grad, vorzugsweise zwischen etwa 50 Grad und 75 Grad liegt, so dass das Material an der Basis der Nut einen "Ritzrest" bildet.

4. Vorrichtung zum Ausführen des Verfahrens nach einem der Ansprüche 1 bis 3, wobei ein oder mehrere Schneidringe für eine Rotation um eine mittlere Achse angeordnet sind und der Amboss konzentrisch zu dieser Achse ist.

5. Vorrichtung zum Ausführen des Verfahrens nach einem der Ansprüche 1 bis 3, wobei die Achse eines zentralen Schneidrings stationär ist und der Amboss rotiert, wobei der Amboss einen Abschnitt mit konstantem Radius für den Kontakt mit dem Becher hat.

6. Vorrichtung nach Anspruch 4 oder Anspruch 5, die ferner Führungsflächen für ein kontrolliertes axiales Gleiten des Bechers aufweist.

7. Vorrichtung nach einem der Ansprüche 4 bis 6, wobei jede Seite der Nut in dem profilierten Ring asymmetrisch ist, so dass eine andere Aufdornung in dem Schneidring als die des geschnittenen Endteils gebildet wird.

## Revendications

1. Procédé de fabrication d'un article en deux parties (10, 11) à partir d'une coupelle (1) comportant une paroi latérale (3) et une base intégrée, formée à partir d'une seule ébauche de tôle, le procédé comprenant les étapes ci-dessous : positionnement de la coupelle au-dessus d'une bague de coupe circulaire (21) comportant un arête périphérique vive (24) ; pression d'une enclume (25) comportant une surface courbée contre l'extérieur de la coupelle et roulement de l'enclume (25) contre la coupelle et autour de celle-ci, pour entraîner la pénétration de l'arête de la bague de coupe dans la paroi latérale de la coupelle, afin de former une rainure circonférentielle continue en forme de « V », le procédé comprenant en outre, lors d'un deuxième stade, l'étape de positionnement de la coupelle au-dessus d'une bague profilée ayant un profil rainuré (44) ;
alignement du profil de manière opposée à la rainure en forme de « V » ; pression et roulement d'un outil de séparation (42) contre l'extérieur de la coupelle, opposé à la rainure, la pénétration de l'outil de séparation dans la paroi de la coupelle entrainant ainsi la division du matériau au niveau du fond de la rainure, et le fléchissement ou « l'évasement « vers l'intérieur du matériau de chaque côté de la fente.

2. Procédé selon la revendication 1, comprenant en outre l'étape de limitation du déplacement axial de la coupelle.

3. Procédé selon l'une quelconque des revendications 1 ou 2, dans lequel la profondeur de la rainure représente entre environ la moitié et les trois quarts de l'épaisseur de paroi, l'angle de pénétration étant compris entre environ 45 degrés et 90 degrés, de préférence entre environ 50 degrés et 75 degrés, le matériau au niveau de la base de la rainure formant ainsi un « résidu de coupe ».

4. Appareil destiné à exécuter le procédé selon l'une quelconque des revendications 1 à 3, dans lequel une ou plusieurs bagues de coupe sont agencées en vue d'une rotation autour d'un axe central, l'enclume étant concentrique à cet axe.

5. Appareil destiné à exécuter le procédé selon l'une quelconque des revendications 1 à 3, dans lequel l'axe d'une bague de coupe centrale est stationnaire, l'enclume tournant, l'enclume comportant une partie à rayon constant pour contacter la coupelle.

6. Appareil selon les revendications 4 ou 5, comprenant en outre des surfaces de guidage en vue d'un glissement axial contrôlé de la coupelle.

7. Appareil selon l'une quelconque des revendications 4 à 6, dans lequel chaque côté de la rainure dans la bague profilée est asymétrique, un évasement dans la bague de coupe différent de celui de la partie d'extrémité de coupe étant ainsi formé.
